# EUROPÄISCHE PATENTANMELDUNG

(11) **EP 3 460 731 A1**
(43) Veröffentlichungstag der Anmeldung: **27.03.2019**
(21) Anmeldenummer: 17192397.2
(22) Anmeldetag: 21.09.2017
(51) Int. Cl.: G06Q 10/06

(54) **VERFAHREN UND SYSTEM ZUR VERRINGERUNG DES TREIBSTOFFVERBRAUCHS VON PASSAGIERFLUGZEUGEN IN EINEM LUFTVERKEHRSSYSTEM**

(71) Anmelder: Hildebrand, Wolfgang, 65201 Wiesbaden (DE); Wiesmeier, Anja, 65189 Wiesbaden (DE)
(72) Erfinder: Hildebrand, Wolfgang, 65201 Wiesbaden (DE); Wiesmeier, Anja, 65189 Wiesbaden (DE)
(74) Vertreter: Mehler Achler

(57) **Zusammenfassung**

Die vorliegende Erfindung betrifft ein Verfahren zur Verringerung des Treibstoffverbrauchs von Passagierflugzeugen in einem Luftverkehrssystem (1), das mindestens zwei Flughäfen (2) umfasst, zwischen denen mindestens eine Flugroute (3) besteht, mit folgenden Schritten:
a) Abrufen von Flugdaten F betreffend die Flughäfen (2) aus einem ersten Speicher (14);
b) Ermitteln einer Flugroute (3), entlang der eine Anzahl von n > 2 Flügen, deren Abflugzeiten in einem ersten Zeitfenster T1 liegen, mittels n erster Passagierflugzeuge durchgeführt wird, aus den Flugdaten F;
c) Ermitteln einer Gesamtpassagierzahl Z der n Flüge und Ablegen der Gesamtpassagierzahl Z in einem zweiten Speicher (16);
d) Auswählen von m ≤ n - 1 zweiten Passagierflugzeugen (40) mit einer Gesamtkapazität Gₘ ≥ Z für die Durchführung von m Flügen;
e) Abrufen von Passagierdaten P der n Flüge aus einem dritten Speicher (17) und Ablegen der Passagierdaten P in dem zweiten Speicher (16);
f) Konfigurieren von Ausstattungsmerkmalen Mₘ der m zweiten Passagierflugzeuge (40) unter Berücksichtigung der Passagierdaten P;
g) Durchführen der m Flüge entlang der ermittelten Flugroute (3) mit den m zweiten Passagierflugzeugen (40) mit Abflugzeiten in dem ersten Zeitfenster T1.

## Beschreibung

Die vorliegende Erfindung betrifft ein Verfahren und ein System zur Verringerung des Treibstoffverbrauchs von Passagierflugzeugen in einem Luftverkehrssystem.

Der Luftverkehr ist eine wesentliche Komponente im globalen Verkehrssystem. Passagier- und Frachtflugzeuge bieten gegenüber anderen Verkehrsmitteln (Kraftfahrzeuge, Schiffe, Eisenbahn) unter anderem einen in der Regel wesentlich schnelleren Transport, wobei dieser Vorteil mit der zu überbrückenden Distanz zunimmt. Es ist zu beachten, dass Passagierflugzeuge in der Regel nicht nur der Beförderung von Passagieren dienen, sondern regelmäßig auch Fracht (Bellyfracht) transportieren.

Unter einer Verringerung des Treibstoffverbrauchs wird insbesondere eine Verringerung des Treibstoffverbrauchs pro geflogenem (transportiertem) Passagiersitz oder geflogenem Passagier verstanden.

Im Allgemeinen gilt, dass durch eine Verbesserung der Auslastung eines Verkehrsmittels der Treibstoffverbrauch pro geflogenem Passagier gesenkt werden kann. Die Verbesserung der durchschnittlichen Auslastung eines Verkehrsmittels wird nachfolgend auch als Kapazitätsoptimierung bezeichnet. Durch eine Kapazitätsoptimierung wird eine Verringerung des Treibstoffverbrauchs erreicht.

Die Kapazitätsoptimierung im Personen- und Güterverkehr war in der Vergangenheit vorrangig von wirtschaftlichen Überlegungen getrieben, da eine Kapazitätsoptimierung mit einer Verringerung des relativen Treibstoffverbrauchs (beispielsweise Treibstoffverbrauch pro Passagier und zurückgelegtem Kilometer) einhergeht. Je geringer der Treibstoffverbrauch für den Transport von Personen oder Gütern ist, desto geringer sind die damit einhergehenden Kosten für Fluggesellschaften und Endverbraucher. Vor dem Hintergrund der globalen Klimaerwärmung ist die Umweltverträglichkeit und insbesondere das Einsparen von Treibstoff und die damit einhergehende Verringerung des CO₂-Ausstoßes zusätzlich ein gesellschaftliches Ziel geworden, mit dem eine weitere Erwärmung der Erde verhindert oder begrenzt werden soll.

Entscheidend für die Umweltverträglichkeit eines Verkehrsmittels ist der Treibstoffverbrauch pro Passagier oder Frachtstück, der wesentlich von der Auslastung des jeweiligen Verkehrsmittels abhängt. Personenkraftwagen (Pkw) weisen häufig eine geringe Auslastung auf, da oftmals nur eine oder zwei Personen in dem Fahrzeug sitzen. Bei zwei Personen beträgt die Auslastung in einem Pkw mit fünf Plätzen 40 %. Passagierflugzeuge weisen, zumindest was die Passagiere angeht, im Vergleich mit Pkws regelmäßig eine höhere Auslastung auf. Dennoch wäre es wünschenswert, die Auslastung der Passagierflugzeuge zu verbessern, um auf diese Weise den Treibstoffverbrauch insgesamt zu senken.

Es ist Aufgabe der Erfindung, den Treibstoffverbrauch von Passagierflugzeugen in einem Luftverkehrssystem zu optimieren.

Die Aufgabe wird durch ein Verfahren zur Verringerung des Treibstoffverbrauchs von Passagierflugzeugen in einem Luftverkehrssystem, das mindestens zwei Flughäfen umfasst, zwischen denen mindestens eine Flugroute besteht, gelöst. Das Verfahren weist folgende Schritte auf:
a) Abrufen von Flugdaten F betreffend die Flughäfen aus einem ersten Speicher;
b) Ermitteln einer Flugroute, entlang der eine Anzahl von n ≥ 2 Flügen, deren Abflugzeiten in einem ersten Zeitfenster T1 liegen, mittels n erster Passagierflugzeuge durchgeführt wird, aus den Flugdaten F;
c) Ermitteln einer Gesamtpassagierzahl Z der n Flüge und Ablegen der Gesamtpassagierzahl Z in einem zweiten Speicher;
d) Auswählen von m ≤ n - 1 zweiten Passagierflugzeugen mit einer Gesamtkapazität Gₘ ≥ Z für die Durchführung von m Flügen ;
e) Abrufen von Passagierdaten P der n Flüge aus einem dritten Speicher und Ablegen der Passagierdaten P in dem zweiten Speicher;
f) Konfigurieren von Ausstattungsmerkmalen Mₘ der m zweiten Passagierflugzeuge unter Berücksichtigung der Passagierdaten P;
g) Durchführen der m Flüge entlang der ermittelten Flugroute mit den m zweiten Passagierflugzeugen mit Abflugzeiten in dem ersten Zeitfenster T1.

Es hat sich gezeigt, dass es Flugrouten gibt, entlang derer in einem ersten Zeitfenster T1 mehrere Flüge durchgeführt werden, die regelmäßig nicht ausgelastet sind. Durch das erfindungsgemäße Verfahren werden diese Flugrouten ermittelt und die Anzahl der notwendigen Flüge auf dieser Flugrouten wird verringert, wodurch die Auslastung und damit die Umweltverträglichkeit verbessert werden. Insbesondere werden durch das erfindungsgemäße Verfahren der Treibstoffverbrauch pro Passagier und Kilometer sowie der CO₂-Ausstoß pro Passagier und Kilometer verringert. Zusätzlich können durch das erfindungsgemäße Verfahren Kosten bei der Beförderung von Passagieren in einem Luftverkehrssystem eingespart werden. Außerdem wird durch die Erfindung die Anzahl der Lärmereignisse in dem Luftverkehrssystem und insbesondere im Umfeld der Flughäfen reduziert.

Die Passagiere der n Flüge haben aufgrund der Buchung bei einer bestimmten Fluggesellschaft eine bestimmte Erwartung an ihren Flug sowie die Ausstattung des den Flug durchführenden Passagierflugzeugs. Diesen Erwartungen muss Rechnung getragen werden, um die Kapazitätsoptimierung durchführen zu können. Dies geschieht durch das Konfigurieren von Ausstattungsmerkmalen Mₘ der m zweiten Passagierflugzeuge, weshalb in diesem Schritt die Passagierdaten P heran gezogen werden. Die Konfiguration erfolgt bevorzugt automatisch.

Die Schritte des erfindungsgemäßen Verfahrens werden in der angegebenen Reihenfolge durchgeführt.

Das Abrufen von Flugdaten F gemäß Schritt a) erfolgt bevorzugt durch eine Recheneinheit. Die Recheneinheit hat Zugriff auf den ersten Speicher und kann die Flugdaten F abrufen.

Das Ermitteln einer Flugroute gemäß Schritt b) erfolgt bevorzugt durch die Recheneinheit. Die Flugroute wird aus den Flugdaten F ermittelt.

Das Ermitteln einer Gesamtpassagierzahl Z gemäß Schritt c) erfolgt bevorzugt durch die Recheneinheit. Die Recheneinheit legt die Gesamtpassagierzahl Z in dem zweiten Speicher ab.

Das Auswählen der m zweiten Passagierflugzeuge gemäß Schritt d) erfolgt bevorzugt durch die Recheneinheit. Vorteilhafterweise besitzt die Recheneinheit hierzu Zugriff auf Datensätze von zur Verfügung stehenden Passagierflugzeugen. Die Gesamtkapazität Gₘ ist die Summe aus den Sitzplatzkapazitäten der m zweiten Passagierflugzeuge. Bevorzugt wird die geringstmögliche Anzahl m zweiter Passagierflugzeuge zur Verfügung stehender zweiter Passagierflugzeuge ausgewählt. Beispielsweise wäre denkbar, dass drei Flüge entweder durch zwei kleinere Passagierflugzeuge oder durch ein großes Passagierflugzeug durchgeführt werden könnten. In diesem Fall wird bevorzugt das eine große Passagierflugzeug als zweites Passagierflugzeug ausgewählt.

Das Abrufen von Passagierdaten P gemäß Schritt e) erfolgt bevorzugt durch die Recheneinheit. Die Recheneinheit hat Zugriff auf den dritten Speicher und kann Daten in dem zweiten Speicher ablegen.

Statt einer einzelnen Recheneinheit können auch mehrere Recheneinheiten vorgesehen werden. Insbesondere können verschiedene Schritte des erfindungsgemäßen Verfahrens durch unterschiedliche Recheneinheiten ausgeführt werden.

Bei vorteilhaften Weiterbildungen beträgt das erste Zeitfenster T1 weniger als eine Stunde, bevorzugt weniger als eine halbe Stunde, besonders bevorzugt weniger als eine Viertelstunde. Je enger zwei Flüge aneinander liegen, desto besser lassen sich diese Flüge durch das erfindungsgemäße Verfahren zusammenlegen, da verhältnismäßig weniger Anpassungen, beispielsweise hinsichtlich der Flugpläne, notwendig sind.

Bevorzugt werden die n Flüge von zumindest zwei unterschiedlichen, insbesondere konkurrierenden, Fluggesellschaften angeboten. Ein wesentlicher Grund dafür, dass in einem bestimmten Zeitfenster mehrere Flüge für die gleiche Flugroute vorgesehen sind, ist die Tatsache, dass mehrere Fluggesellschaften einen Flug für dieselbe Flugroute anbieten. Das erfindungsgemäße Verfahren bietet hier die Möglichkeit, dass insbesondere diese Flüge zusammengelegt werden. Das führt dazu, dass Passagiere unterschiedlicher Fluggesellschaften z.B. in einem einzigen Passagierflugzeug befördert werden, was zu einer Verbesserung der Auslastung führt. Unter konkurrierenden Fluggesellschaften werden insbesondere Fluggesellschaften verstanden, die wirtschaftlich getrennt sind. Besonders bevorzugt gehören die konkurrierenden Fluggesellschaften nicht derselben Luftfahrtallianz (z.B. Star Alliance) an.

Es hat sich gezeigt, dass besonders Flugrouten, die von kleineren und mittelgroßen Passagierflugzeugen bedient werden, gering ausgelastet sind. Bevorzugt weisen die n ersten Passagierflugzeuge daher jeweils eine Sitzplatzkapazität Kₙ ≤ 250, bevorzugt ≤ 200, besonders bevorzugt ≤ 150 auf. Flugrouten, die von größeren Passagierflugzeugen bedient werden, werden daher bevorzugt nicht für das erfindungsgemäße Verfahren herangezogen.

Um eine möglichst große Verbesserung der Auslastung zu erreichen, ist bei vorteilhaften Weiterbildungen vorgesehen, dass die n Flüge jeweils eine maximale Auslastung Aₙ ≤ 90 %, bevorzugt ≤ 75 %, besonders bevorzugt ≤ 60 % aufweisen. Auf diese Weise werden ausschließlich Flüge mit einer nicht vollständigen Auslastung ersetzt. Bei diesen Flügen ist das Potential zur Verbesserung des Treibstoffverbrauchs hoch.

Die Auslastung von Flugzeugen ist insbesondere im Regionalflugverkehr oftmals vergleichsweise niedrig oder zumindest nicht optimal. Unter Regionalflugverkehr wird Flugverkehr mit Flugstrecken (Luftlinie zwischen Start- und Zielflughafen) unter 1800 km verstanden (zum Vergleich: in Deutschland beträgt die Luftlinie zwischen Rostock und Freiburg rund 740 km, in den USA beträgt die Luftlinie zwischen New York City und Atlanta 1200 km). Bei vorteilhaften Weiterbildungen ist daher vorgesehen, dass in Schritt b) nur Flugrouten mit einer Flugstrecke S ≤ 1800 km, insbesondere S ≤ 1000 km, berücksichtigt werden.

Zusätzlich unterliegen Flüge im Regionalflugverkehr hinsichtlich der Auslastung starken Schwankungen. Diese Schwankungen können beispielsweise innerhalb einer Arbeitswoche, innerhalb einer Saison oder aufgrund von Sonderereignissen auftreten. Durch die kurzfristige Zusammenlegung mehrerer Flüge können Schwankungen wesentlich besser ausgeglichen werden. Hierzu werden bevorzugt in Schritt d) aus einem Flugzeugpool die m zweiten Passagierflugzeuge mit der geringsten Gesamtkapazität Gₘ ausgewählt.

Bei vorteilhaften Weiterbildungen ist vorgesehen, dass die Gesamtpassagierzahl Z der n Flüge in Schritt c) anhand erfolgter Buchungen ermittelt wird. Auf diese Weise kann tatsächlich ermittelt werden, wie viele Passagiere befördert werden müssen. Anschließend können in Schritt d) geeignete zweite Passagierflugzeuge bzw. ein geeignetes zweites Passagierflugzeug ausgewählt werden. Auf diese Weise können kurzfristig n Flüge durch m ≤ n - 1 Flüge ersetzt werden, wodurch der Treibstoffverbrauch insgesamt verringert wird.

Um ein kurzfristiges Ersetzen von m Flügen durch n Flüge zu ermöglichen ist bei vorteilhaften Weiterbildungen vorgesehen, dass die Schritte e) und f) in einem zweiten Zeitfenster T2 ≤ 48 h, insbesondere T2 ≤ 24 h, vor den Abflugzeiten der m Flüge durchgeführt werden. Bevorzugt ist 1 h ≤ T2.

Bei vorteilhaften Weiterbildungen ist vorgesehen, dass die Gesamtpassagierzahl Z der n Flüge in Schritt c) anhand prognostizierter Buchungen ermittelt wird, insbesondere durch Erfahrungswerte von vergleichbaren Flügen. Diese Vorgehensweise ist insbesondere bei Flügen, die weiter in der Zukunft (beispielsweise mehrere Monate entfernt) liegen, von Vorteil. Insbesondere bei regelmäßig stattfindenden n Flügen lässt sich die Gesamtpassagierzahl Z prognostizieren. Beispielsweise kann der Mittelwert der in der Vergangenheit durchgeführten n Flüge die prognostizierte Gesamtpassagierzahl Z sein. Alternativ kann die bei den in der Vergangenheit durchgeführten Flügen maximal erreichte Passagierzahl, ggf. mit einem Korrekturabschlag, die prognostizierte Gesamtpassagierzahl Z sein.

Flugpläne mit Flügen der Fluggesellschaften werden üblicherweise für mehrere Flugplanperioden im Voraus festgelegt. Dabei wird zwischen Sommerflugplanperiode und Winterflugplanperiode unterschieden. Die Flugplanperioden umfassen jeweils den Zeitraum zwischen zwei Zeitumstellungen. Die Winterflugplanperiode dauert ca. fünf Monate, die Sommerflugplanperiode ca. sieben Monate. Auf die Sommerflugplanperiode 2017 folgt beispielsweise die Winterflugplanperiode 2017/2018 (im Folgenden auch kurz Winterflugplanperiode 2017); auf die Winterflugplanperiode 2017 folgt die Sommerflugplanperiode 2018.

Für Fluggesellschaften (B2B-Kunden), mit denen mittel- und langfristige Verträge abgeschlossen wurden, sind jeweils 3 Flugplanperioden mit den relevanten Flügen vorzuhalten. Auf dieser Plattform können die Industrie-üblichen Vorausbuchungsfristen (maximal 360 Tage) eingehalten werden.

Bei vorteilhaften Weiterbildungen des erfindungsgemäßen Verfahrens ist vorgesehen, dass die Schritte a) bis d) während einer Flugplanperiode und die Schritte e) bis g) in einer späteren Flugplanperiode, insbesondere der übernächsten Flugplanperiode, durchgeführt werden. Auf diese Weise ist eine langfristige Planung möglich, was insbesondere die Koordination der zweiten Passagierflugzeuge erleichtert. Werden beispielsweise die Schritte a) bis d) in der Sommerflugplanperiode 2017 durchgeführt, so werden die Schritte e) bis g) besonders bevorzugt in der Sommerflugplanperiode 2018 durchgeführt.

Wie oben beschrieben gibt es Flüge, die regelmäßig stattfinden, beispielsweise wöchentlich, täglich oder arbeitstäglich. Eine besonders hohe Verringerung des Treibstoffverbrauchs von Passagierflugzeugen in einem Luftverkehrssystem kann erreicht werden, indem n regelmäßig stattfindende Flüge durch m ≤ n - 1 regelmäßig stattfindende Flüge ersetzt werden. Bei vorteilhaften Weiterbildungen ist daher vorgesehen, dass die Schritte e) bis g) im Anschluss an die Schritte a) bis d) mehrfach, insbesondere regelmäßig, wiederholt werden. Das Abrufen der Flugdaten F, die Ermittlung geeigneter Flugrouten, das Ermitteln der Gesamtpassagierzahl Z und das Auswählen von m zweiten Passagierflugzeugen muss dabei nur einmal durchgeführt werden, da die m zweiten Passagierflugzeuge jeden der regelmäßig wiederkehrenden Flüge durchführen können.

Das Abrufen der Passagierdaten P und das anschließende Konfigurieren der zweiten Passagierflugzeuge wird dann regelmäßig wiederholt, da aufgrund der für jeden Flug unterschiedlichen Passagierdaten P eine unterschiedliche Konfiguration erforderlich sein kann.

Regelmäßig durchgeführte Flüge werden auch als Flugverbindung bezeichnet. Eine beispielhafte Flugverbindung kann lauten: Frankfurt -> Hamburg, wöchentlich, montags, 8 Uhr. Über eine Flugplanperiode gesehen hat eine Flugverbindung g Flüge, wobei g in der Regel je nach Länge der Flugplanperioden 21 bis 23 für die Winterflugplanperiode und 30 bis 32 für die Sommerflugplanperiode beträgt. Bei vorteilhaften Weiterbildungen ist vorgesehen, dass n Flugverbindungen mit jeweils g Flügen durch m Flugverbindungen mit jeweils g Flügen ersetzt werden. Auf diese Weise steht für die Passagiere die gleiche Kapazität an Sitzplätzen zur Verfügung und da m ≤ n - 1 ist wird dennoch der Treibstoffverbrauch verringert, indem eine Kapazitätsoptimierung stattfindet.

Um das Konfigurieren der Ausstattungsmerkmale Mₘ der m zweiten Passagierflugzeuge zu vereinfachen, ist bei vorteilhaften Weiterbildungen vorgesehen, dass zumindest ein Teil der Passagierdaten P an die m zweiten Passagierflugzeuge übertragen wird. Die Passagierdaten P können Informationen enthalten, die für die Durchführung der m Flüge nicht relevant sind und die daher nicht in dem zweiten Speicher abgelegt oder nicht an die m zweiten Passagierflugzeuge übertragen werden müssen. Die Ausstattungsmerkmale Mₘ der zweiten Passagierflugzeuge können dann unter Berücksichtigung der Passagierdaten P konfiguriert werden. Besonders bevorzugt wird vor Schritt f) mittels einer ersten Steuereinheit zumindest ein Teil der Passagierdaten P aus dem zweiten Speicher abgerufen, wobei ein erstes Steuersignal erstellt und an die m zweiten Passagierflugzeuge übermittelt wird. Die zweiten Passagierflugzeuge können jeweils einen fünften Speicher aufweisen, in dem die Passagierdaten P abgelegt werden.

Bei vorteilhaften Weiterbildungen ist vorgesehen, dass vor Schritt d) allgemeine Informationen I aus einem vierten Speicher abgerufen und für Schritt d) verwendet werden. Die allgemeinen Informationen I enthalten nichtflugspezifische Informationen, insbesondere Informationen zu Flugzeugtypen und deren Eigenschaften. Mittels der allgemeinen Informationen I können die zweiten Passagierflugzeuge besser dahingehend ausgewählt werden, dass eine Verringerung des Treibstoffverbrauchs eintritt.

Wie bereits beschrieben wird auch mit Passagierflugzeugen regelmäßig Fracht transportiert, nämlich als Bellyfracht. Vorteilhafterweise ist vorgesehen, dass in Schritt e) Frachtinformationen der m Flüge, insbesondere Bellyfrachtinformationen, ermittelt und die Frachtinformationen bei dem Konfigurieren von Ausstattungsmerkmalen Mₘ der m zweiten Passagierflugzeuge berücksichtigt werden. Zu den Frachtinformationen gehören insbesondere Angaben zur Art der Fracht (Post, Pakete, Tiere, Kühlgut, etc.), zu den verwendeten Containern (bspw. LD3), zu dem Auftraggeber und/oder zu demjenigen, der ursprünglich mit der Beförderung beauftragt ist. Bei der Konfiguration der m zweiten Passagierflugzeuge können die Frachtinformationen beispielsweise dadurch berücksichtigt werden, dass ein Rollenbett in einem Unterflurfrachtraum oder einem Teil davon vorgesehen wird.

Bei vorteilhaften Weiterbildungen wird vor Schritt d) geprüft, ob in einem Flugzeugpool m ≤ n - 1 zweite Passagierflugzeuge zur Verfügung stehen, die eine Gesamtkapazität Gₘ ≥ Z aufweisen, wobei das Verfahren nur dann fortgeführt wird, wenn diese Bedingung erfüllt ist. Der Flugzeugpool umfasst eine Mehrzahl von Flugzeugen, die grundsätzlich als zweite Passagierflugzeuge eingesetzt werden können. Der Flugzeugpool sowie die jeweilige Kapazität der Flugzeuge des Flugzeugpools sind begrenzt, sodass es sein kann, dass ein Ersetzen der n ersten Passagierflugzeuge durch m zweite Passagierflugzeuge nicht möglich ist.

Nur wenn festgestellt wurde, dass das Ersetzen möglich ist, wird das Verfahren mit Schritt d) fortgeführt. Andernfalls wird das Verfahren abgebrochen.

Die m zweiten Passagierflugzeuge weisen bei vorteilhaften Weiterbildungen jeweils eine zweite Steuereinheit auf. Die zweite Steuereinheit kann auf den fünften Speicher und darin enthaltene Daten, insbesondere Passagierdaten P, zugreifen. Die Konfiguration der Ausstattungsmerkmale Mₘ der zweiten Passagierflugzeuge erfolgt bevorzugt mittels der zweiten Steuereinheit.

Um die Kapazitätsoptimierung zu ermöglichen werden bevorzugt die Ausstattungsmerkmale Mₘ der m zweiten Passagierflugzeuge in Abhängigkeit von Ausstattungsmerkmalen Mₙ der n ersten Passagierflugzeuge konfiguriert. Auf diese Weise finden die Passagiere im Wesentlichen die gleichen Ausstattungsmerkmale Mₘ in den m zweiten Passagierflugzeugen vor, die sie auch in den n ersten Passagierflugzeugen vorgefunden hätten.

Besonders bevorzugt werden die Ausstattungsmerkmale Mₘ der m zweiten Passagierflugzeuge so konfiguriert, dass jedes Ausstattungsmerkmal Mₙ jedes der n ersten Passagierflugzeuge mindestens gleichwertig vorhanden ist. Auf diese Weise ist sichergestellt, dass die Passagiere mindestens das gleiche Niveau hinsichtlich Komfort, Verpflegung etc. erhalten.

Die Ausstattungsmerkmale Mₙ, Mₘ umfassen bevorzugt zumindest ein Ausstattungsmerkmal aus zumindest einer der folgenden Kategorien: Interieurausstattung des Flugzeugs, Exterieurausstattung des Flugzeugs, Zubehör, Brandingartikel, Funknetze.

Die zweiten Passagierflugzeuge weisen bevorzugt eine Mehrzahl von Sitzreihen mit jeweils zumindest einem Sitzplatz auf.

Zur Interieurausstattung eines Flugzeugs gehören insbesondere die Aufteilung in Buchungsklassen (beispielsweise first class, business class und economy class), die Anordnung und Abstände der Sitzreihen, die Sitzplatzausstattung, Textilwaren wie beispielsweise Fußmatten und auch Bildschirme, die nicht einzelnen Sitzplätzen zugeordnet sind. Zu der Sitzplatzausstattung gehören insbesondere die Ausgestaltung der Sitzbezüge, die Anordnung des Sitzes in der dazugehörigen Sitzreihe (Fensterplatz, Gangplatz, etc.), der Sitzplatzkomfort (z. B. Art der Polsterung, Größe des Sitzplatzes), der Umfang des In-Flight-Entertainment (z. B. Bildschirm, Videoangebot, Kopfhörerbuchse, Stromversorgung, Internetanschluss) und die Sitzeinstellmöglichkeiten (z. B. Neigung des Sitzes). Zu der Konfiguration der Interieuraustattung des Flugzeugs kann auch das Hinzufügen oder Entfernen von Sitzreihen gehören. Das Hinzufügen und Entfernen erfolgt bevorzugt teilautomatisch oder vollautomatisch.

Die Exterieurausstattung eines Flugzeugs umfasst insbesondere Brandingartikel auf der Außenhaut und/oder an den Eingängen des Flugzeugs (beispielsweise in Form von Bildschirmen, die ein Logo oder einen Schriftzug anzeigen, oder Schildern).

Durch Brandingartikel wird in Passagierflugzeugen visualisiert, welche Fluggesellschaft einen Flug durchführt. Die Brandingartikel werden daher bevorzugt in Abhängigkeit davon konfiguriert werden, welche Fluggesellschaften die n Flüge anbieten. Mitunter können die Brandingartikel daher auch so konfiguriert sein, dass sie mehrere Fluggesellschaften anzeigen und/oder dass unterschiedliche Brandingartikel in einem einzigen Passagierflugzeug unterschiedliche Fluggesellschaften symbolisieren. Zu den Brandingartikeln gehören insbesondere Kleidung des Flugzeugpersonals, Servietten, Kissen und Socken, Antimakassars.

In die Kategorie Zubehör fallen insbesondere Medikamente, Hygieneartikel, Kopfhörer und Zeitschriften.

Zu den Funknetzen gehören insbesondere WLAN und Mobilfunknetz. Vorteilhafterweise unterstützen die zweiten Passagierflugzeuge dabei unterschiedliche Systeme, Protokolle, Frequenzen und Anbieter.

Um den Aufwand möglichst gering zu halten und somit die Effizienz des erfindungsgemäßen Verfahren zu verbessern und gleichzeitig die Anforderungen der Passagiere an die Ausstattungsmerkmale der zweiten Passagierflugzeuge zu erfüllen, ist bei vorteilhaften Weiterbildungen vorgesehen, dass verschiedene Innenraumabschnitte und/oder Sitzreihen und/oder Sitzplätze in den m zweiten Passagierflugzeugen unterschiedlich konfiguriert werden, insbesondere in Abhängigkeit der Ausstattungsmerkmale Mₙ der n ersten Passagierflugzeuge. Dadurch wird bei den verschiedenen Innenraumabschnitten und/oder Sitzreihen und/oder Sitzplätzen nur der minimal erforderliche Aufwand durchgeführt, was die Effizienz der Kapazitätsoptimierung steigert.

Die einzelnen Sitzplätze und/oder die Sitzreihen weisen z. B. entsprechende Stellmotoren auf, die mittels der zweiten Steuereinheit in den m zweiten Passagierflugzeugen angesteuert und auf diese Weise konfiguriert werden.

Bei vorteilhaften Weiterbildungen ist vorgesehen, dass die Passagierdaten P zu jedem belegten Sitzplatz in den n ersten Passagierflugzeugen eine Buchungsinformation B aufweisen, wobei jede Buchungsinformation B einem Sitzplatz in den m zweiten Passagierflugzeuge zugewiesen wird. Die Zuordnung der Buchungsinformationen B zu einem Sitzplatz erfolgt bevorzugt durch die Recheneinheit. Die Buchungsinformationen B enthalten insbesondere Daten zu den Ausstattungsmerkmalen, die der auf dem entsprechenden Sitzplatz gebuchte Passagier erwartet.

Die den einzelnen Sitzplätzen zugeordneten Buchungsinformationen B können anschließend zur Konfiguration der Ausstattungsmerkmale Mₘ der m zweiten Passagierflugzeuge verwendet werden. Insbesondere können Sitzreihen der m zweiten Passagierflugzeuge in Abhängigkeit der Buchungsinformationen B von Sitzplätzen der jeweiligen Sitzreihe hinsichtlich ihrer Position verändert werden. Die Veränderung der Position erfolgt bevorzugt mittels zumindest einem Stellmotor.

Jeder Sitzplatz weist bevorzugt eine Sitzplatzumgebung auf. Unter der Sitzplatzumgebung wird das unmittelbare Umfeld eines Sitzplatzes verstanden. Hierzu gehören insbesondere ein Tisch, ein Bildschirm und Aufbewahrungstaschen, die üblicherweise an einem Sitz der vorangehenden Sitzreihe angeordnet sind, an dem Sitz angeordnete Aufbewahrungsmöglichkeiten, Beleuchtungs- und Belüftungsmittel für den Sitz sowie in und um den Sitz angeordnete Brandingartikel.

Vorteilhafterweise wird mindestens ein Sitzplatz und/oder mindestens eine Sitzplatzumgebung des Sitzplatzes in Abhängigkeit der Buchungsinformationen B des Sitzplatzes angepasst. Auf diese Weise ist es möglich, jedem einzelnen Passagier den Eindruck zu vermitteln, den er auch in dem ersten Passagierflugzeug erhalten hätte.

Bei besonders vorteilhaften Weiterbildungen wird mindestens ein Bildschirm einer Sitzplatzumgebung in Abhängigkeit der Buchungsinformationen B des zugehörigen Sitzplatzes angesteuert. Auf diese Weise kann beispielsweise ein Logo der Fluggesellschaft angezeigt werden, die den Flug des Passagiers der zugehörigen Buchungsinformation B ursprünglich durchführen sollte. Die Ansteuerung erfolgt vorteilhafterweise durch die zweite Steuereinheit des zugehörigen zweiten Passagierflugzeugs.

Bevorzugt weist mindestens ein Sitzplatz und/oder mindestens eine Sitzplatzumgebung des Sitzplatzes jeweils mindestens das Ausstattungsniveau gemäß der Buchungsinformation B des zugehörigen Sitzplatzes auf. Dadurch wird die Akzeptanz der Passagiere für die Zusammenlegung der Flüge und die dadurch erreichte Verringerung des Treibstoffverbrauchs erhöht. Unter dem Ausstattungsniveau kann sowohl die Qualität als auch die Quantität der Ausstattung des Sitzplatzes und/oder der Sitzplatzumgebung verstanden werden.

Üblicherweise haben Passagiere, die eine höherwertige Buchung (mit höherwertigen Ausstattungsmerkmalen und/oder einer höherwertigen Buchungsklasse) getätigt haben, höhere Ansprüche an die exakte Einhaltung der gebuchten Ausstattungsmerkmale. Bei vorteilhaften Weiterbildungen ist vorgesehen, dass die Buchungsinformationen B mittels Kriterien in ein Ranking eingeteilt werden, wobei die Buchungsinformationen B unter Verwendung des Rankings automatisch auf die Sitzplätze in den m zweiten Passagierflugzeugen verteilt und die Sitzplätze und/oder die Sitzplatzumgebungen der Sitzplätze in Abhängigkeit der jeweils zugeordneten Buchungsinformationen B konfiguriert werden. Zu den Kriterien zählen insbesondere die Buchungsklasse sowie das Niveau oder die Niveaus der Ausstattungsmerkmale, die in den Buchungsinformationen B hinterlegt sind. Auf diese Weise wird sichergestellt, dass tendenziell Passagiere mit einer höherwertigen Buchung mit einer höheren Wahrscheinlichkeit die gebuchten Ausstattungsmerkmale oder sogar höherwertige vorfinden.

Bei vorteilhaften Weiterbildungen ist vorgesehen, dass in Schritt e) aus den Passagierdaten P Lieferinhalte Lₙ der n Flüge ermittelt werden und mittels mindestens einer Liefereinheit in Abhängigkeit von den Lieferinhalten Lₙ der n Flüge Lieferinhalte Lₘ zu den m zweiten Passagierflugzeuge geliefert werden. Zum einen wird damit sichergestellt, dass die Passagiere bei der Kapazitätsoptimierung weiterhin insbesondere die gewünschte Verpflegung erhalten. Zum anderen können die gewünschte Interieur- und Exterieurausstattung sowie Brandingartikel und Zubehör für die m zweiten Passagierflugzeuge auf diese Weise bereitgestellt werden. Die Ermittlung der erforderlichen Lieferinhalte erfolgt bevorzugt mittels der Passagierdaten P, insbesondere mittels der Buchungsinformationen B.

Die Lieferinhalte Lₙ, Lₘ umfassen bevorzugt zumindest einen der folgenden Lieferinhalte: Verpflegung, insbesondere Speisen und Getränke, Interieurausstattung, insbesondere Sitzüberzüge, Exterieurausstattung, insbesondere Schilder, Brandingartikel, insbesondere Serviette, Kissen und/oder Socken, Antimakassars, sowie weiteres Zubehör, insbesondere Medikamente, Hygieneartikel, Kopfhörer und/oder Verkaufsartikel.

Es ist erfindungsgemäß möglich, dass ein Teil der Konfiguration der Ausstattungsmerkmale der zweiten Passagierflugzeuge manuell durchgeführt wird. Bei dem erfindungsgemäßen Verfahren ist daher bei vorteilhaften Weiterbildungen vorgesehen, dass Flugbegleitern in Schritt f) auf zumindest einer Anzeigevorrichtung angezeigt wird, welcher Sitzplatz mit welchen Ausstattungsmerkmalen Mₘ und/oder welchen Lieferinhalten Lₘ auszustatten ist.

Die Aufgabe der Erfindung wird auch durch ein System zur Verringerung des Treibstoffverbrauchs gelöst. Das erfindungsgemäße System zur Verringerung des Treibstoffverbrauchs von Passagierflugzeugen in einem Luftverkehrssystem, das mindestens zwei Flughäfen umfasst, zwischen denen mindestens eine Flugroute besteht, weist eine Recheneinheit, einen ersten Speicher, zumindest ein zweites Passagierflugzeug, einen zweiten Speicher und eine erste Steuereinheit auf, wobei in dem ersten Speicher Flugdaten F betreffend die Flughäfen gespeichert sind und wobei in dem zweiten Speicher Passagierdaten P und/oder Gesamtpassagierzahlen Z gespeichert werden können. Das erfindungsgemäße System ist dadurch gekennzeichnet, dass das zumindest eine zweite Passagierflugzeug in Abhängigkeit von einem ersten Steuersignal der ersten Steuereinheit hinsichtlich seiner Ausstattungsmerkmale Mₘ veränderbar ist.
Bei vorteilhaften Weiterbildungen ist ein dritter Speicher vorgesehen, in dem Passagierdaten P gespeichert sind. Der dritte Speicher kann mit Check-In-Schaltern der Fluglinien verbunden sein. Die Check-In-Schalter können die Passagierdaten P in dem dritten Speicher ablegen oder modifizieren.

Die Übermittlung des ersten Steuersignals erfolgt bevorzugt drahtgebunden (bspw. mittels einer Datenleitung) oder drahtlos (bspw. mittels eines Funknetzes).

Das System ist bevorzugt zur Ausführung des erfindungsgemäßen Verfahrens ausgebildet. Durch das erfindungsgemäße System kann eine Verringerung des Treibstoffverbrauchs des Luftverkehrssystems erreicht werden, indem die Flugroute durch das zumindest eine zweite Passagierflugzeug bedient wird. Das zumindest eine zweite Passagierflugzeug weist bevorzugt einen fünften Speicher auf, in dem zumindest ein Teil der Passagierdaten abgelegt wird.

Bei vorteilhaften Weiterbildungen ist bei dem erfindungsgemäßen System eine Liefereinheit vorgesehen, die in Abhängigkeit von einem zweiten Steuersignal Lieferinhalte Lₘ zu dem zumindest einen zweiten Passagierflugzeug liefert. Auf diese Weise können automatisch die benötigten Lieferinhalte zu dem zumindest einen zweiten Passagierflugzeug geliefert werden. Die Liefereinheit weist bevorzugt zumindest ein Liefermittel, beispielsweise ein Lieferfahrzeug, auf, mittels dem die Lieferinhalte zu dem zumindest einen zweiten Passagierflugzeug geliefert werden.

Bevorzugt ist eine erste Steuereinheit zum Abrufen der Passagierdaten P aus dem zweiten Speicher sowie zum Erstellen und Übermitteln des ersten Steuersignals an das zumindest eine zweite Passagierflugzeug und/oder zum Erstellen und Übermitteln des zweiten Steuersignals an die Liefereinheit vorgesehen. Die erste Steuereinheit erleichtert die Koordination zwischen dem zumindest einen zweiten Passagierflugzeug und der Liefereinheit.

Bei vorteilhaften Weiterbildungen ist ein vierter Speicher vorgesehen, in dem allgemeine Informationen I abgelegt sind. Diese allgemeinen Informationen I können bei der Auswahl des zumindest einen zweiten Passagierflugzeugs herangezogen und verwendet werden, um die Flugzeuge auszuwählen, welche die größten Vorteile hinsichtlich einer Verringerung des Treibstoffverbrauchs bieten.

Der erste Speicher und/oder der zweite Speicher und/oder der dritte Speicher und/oder der vierte Speicher ist entweder mit der Recheneinheit verbunden oder sie sind in die Recheneinheit integriert. Zwei oder mehr der Speicher können auch durch einen gemeinsamen Speicher ersetzt werden.

Bei vorteilhaften Weiterbildungen ist vorgesehen, dass das zumindest eine zweite Passagierflugzeug zumindest einen fünften Speicher aufweist. Auf dem fünften Speicher kann zumindest ein Teil der Passagierdaten P abgelegt werden, insbesondere durch die erste Steuereinheit. Mittels der auf dem fünften Speicher gespeicherten Passagierdaten kann das dazugehörige zweite Passagierflugzeug anschließend konfiguriert werden, ohne dass eine weitere Datenverbindung außerhalb des Passagierflugzeugs nötig ist.

Bevorzugt weist das zumindest eine zweite Passagierflugzeug zumindest eine zweite Steuereinheit auf. Mittels der zweiten Steuereinheit können die Ausstattungsmerkmale Mₘ des zweiten Passagierflugzeugs angesteuert und dadurch konfiguriert werden. Die zweite Steuereinheit ruft hierzu bevorzugt Passagierdaten P aus dem fünften Speicher ab.

Bei vorteilhaften Weiterbildungen ist vorgesehen, dass das zumindest eine zweite Passagierflugzeug zumindest eine Anzeigevorrichtung aufweist, die an zumindest einem Trolley in den m zweiten Passagierflugzeugen und/oder im Bereich einer Bordküche der m zweiten Passagierflugzeuge angeordnet ist. Auf der zumindest einen Anzeigevorrichtung kann angezeigt werden, welcher Sitzplatz mit welchen Ausstattungsmerkmalen Mₘ und/oder welchen Lieferinhalten Lₘ auszustatten ist

Hinsichtlich des erfindungsgemäßen Verfahrens als vorteilhaft beschriebene Merkmale können auch für vorteilhafte Weiterbildungen des erfindungsgemäßen Systems verwendet werden. Gleiches gilt auch für den umgekehrten Fall.

Die Erfindung wird nachfolgend anhand der Figuren beispielhaft dargestellt und erläutert. Es zeigt dabei:
- Figur 1: schematisch ein Luftverkehrssystem;
- Figur 2: schematisch ein System zur Verringerung des Treibstoffverbrauchs von Passagierflugzeugen;
- Figur 3: einen Zeitstrahl des erfindungsgemäßen Verfahrens gemäß einer ersten Ausführungsform;
- Figur 4: einen Zeitstrahl des erfindungsgemäßen Verfahrens gemäß einer zweiten Ausführungsform;
- Figur 5: schematisch ein zweites Passagierflugzeug.

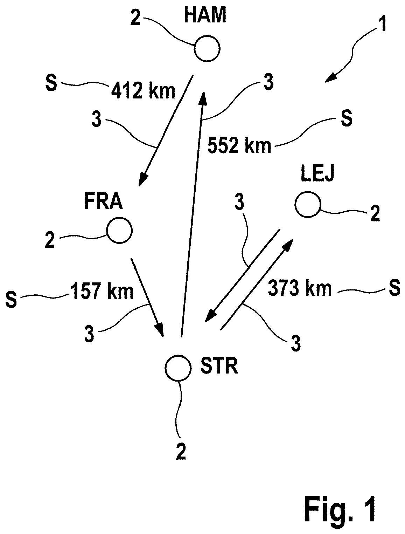

In Figur 1 ist ein Luftverkehrssystem 1 beispielhaft dargestellt, das nachfolgend zur Veranschaulichung des erfindungsgemäßen Verfahrens dient. Das hier betrachtete Luftverkehrssystem 1 weist vier Flughäfen 2 auf, nämlich Frankfurt am Main (FRA), Hamburg (HAM), Leipzig/Halle (LEJ) und Stuttgart (STR). Zwischen den Flughäfen 2 verlaufen Flugrouten 3. Bei dem gezeigten Beispiel sind folgende vier Flugrouten 3 vorgesehen: von HAM nach FRA, von FRA nach STR, von STR nach HAM, von STR nach LEJ und von LEJ nach STR.

Die Flugrouten 3 sind mit den jeweiligen Flugstrecken S (Luftlinie) versehen. Die Flugstrecken S betragen zwischen Frankfurt und Hamburg 412 km, zwischen Frankfurt und Stuttgart 157 km, zwischen Hamburg und Stuttgart 552 km und zwischen Leipzig/Halle und Stuttgart (und anders herum) 373 km. Sämtliche Flugstrecken S und die dazugehörigen Flugrouten 3 gehören zum sogenannten Regionalverkehr (S ≤ 1800 km).

Die einzelnen Flugrouten 3 werden von verschiedenen Fluggesellschaften bedient. Das bedeutet, dass verschiedene Fluggesellschaften Flüge entlang der gleichen Flugrouten 3 anbieten. Kunden können einen Sitzplatz auf den angebotenen Flügen buchen, wobei die Buchung dann eine Buchungsinformation B der Passagierdaten P bildet.

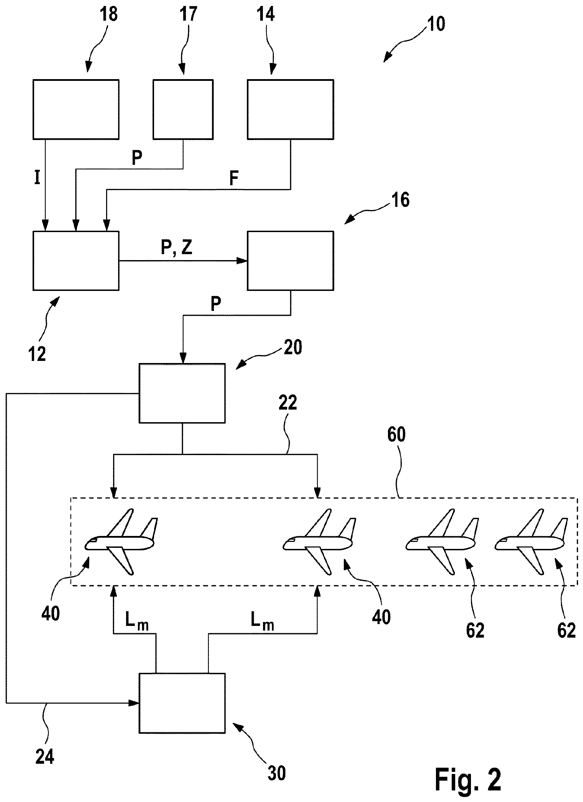

Das in Figur 2 dargestellte System 10 zur Verringerung des Treibstoffverbrauchs von Passagierflugzeugen in einem Luftverkehrssystem 1 ist zur Durchführung des erfindungsgemäßen Verfahrens geeignet. Das System 10 weist eine Recheneinheit 12 sowie einen ersten Speicher 14, einen zweiten Speicher 16, einen dritten Speicher 17 und einen vierten Speicher 18 auf.

In dem ersten Speicher 14 sind die Flugdaten F des Luftverkehrssystems 1 gemäß Figur 1 abgelegt. Die Recheneinheit 12 ruft die Flugdaten F aus dem ersten Speicher 14 ab und ermittelt aus den Flugdaten F eine Flugroute 3, entlang der in einem vorgegebenen in der Zukunft liegenden ersten Zeitfenster T1 eine Anzahl von n ≥ 2 Flügen mittels n erster Passagierflugzeuge durchgeführt wird. Ein Beispiel für Flugdaten F ist aus Tabelle 1 zu entnehmen.

**Tabelle 1**

| **Flugnummer** | **Startort** | **Zielort** | **Abflugzeit** | **Flugzeugtyp** | **Buchungen** |
|---|---|---|---|---|---|
| *A1234* | *STR* | *HAM* | *6:30* | *A319-100* | *129* |
| *E4711* | *STR* | *HAM* | *6:35* | *A319-100* | *120* |
| F2874 | LEJ | STR | 6:40 | 737-700 | 101 |
| F4782 | STR | LEJ | 6:50 | 737-700 | 99 |
| *L1337* | *STR* | *HAM* | *6:50* | *A319-100* | *135* |
| L1548 | FRA | HAM | 7:20 | 737-800 | 80 |
| L2589 | FRA | STR | 7:28 | A319-100 | 100 |

Die Flugdaten F enthalten Informationen zu den einzelnen Flügen, insbesondere die Flugnummer, den Start- und den Zielort, die Abflugzeit, den vorgesehenen Flugzeugtyp (erstes Passagierflugzeug) und die Anzahl der bisher eingegangenen Buchungen.

In Tabelle 2 sind Informationen zu verschiedenen Flugzeugtypen dargestellt, nämlich die Kapazität, also die für eine Buchung zur Verfügung stehenden Sitzplätze, den Treibstoffverbrauch pro Flugstunde in Kilogramm (kg) sowie den daraus errechneten Treibstoffverbrauch pro Sitzplatz und Flugstunde in Kilogramm. Sämtliche Angaben sind Durchschnittswerte und gelten für ein vollbesetztes Flugzeug (Auslastung = 100 %). Die in Tabelle 2 dargestellten Informationen sowie gegebenenfalls weitere allgemeine, also nichtflugspezifische Informationen I werden durch die Recheneinheit 12 aus einem vierten Speicher 18 abgerufen. Die verschiedenen Flugzeugtypen werden mitunter bei verschiedenen Fluggesellschaften oder sogar bei ein und derselben Fluggesellschaft unterschiedlich ausgestattet. Die Ausstattung erfolgt dabei beim Hersteller des Flugzeugs, der vor der Auslieferung des Flugzeugs nach Wunsch der Fluggesellschaft die Ausstattung anpasst. Auch diese Unterschiede können in den Informationen I in dem vierten Speicher 18 hinterlegt sein.

**Tabelle 2**

| Flugzeugtyp | Sitzplätze (Kapazität) | Treibstoff pro Flugstunde in kg | Treibstoff pro Sitzplatz und Flugstunde in kg |
|---|---|---|---|
| A319-100 | 150 | 2500 | 16,67 |
| A320-200 | 180 | 2500 | 13,89 |
| 737-700 | 144 | 2420 | 16,81 |
| 737-800 | 186 | 2526 | 13,58 |
| A321-200 | 210 | 2600 | 12,38 |
| A330-220 | 290 | 5300 | 18,28 |

| | | | |
|---|---|---|---|
| Quelle: Website Air Berlin PLC & Co. Luftverkehrs KG | | | |

Der Recheneinheit 12 wird ein erstes Zeitfenster T1 von 20 Minuten vorgegeben. Die Recheneinheit 12 ermittelt aus den Flugdaten F die Flugroute STR-HAM, entlang der in einem ersten Zeitfenster T1 von zwanzig Minuten drei Flüge (A1234, E4711, L1337) angeboten werden (siehe Tabelle 1), n beträgt demnach 3 (n = 3).

In dem dritten Speicher 17 sind Passagierdaten P zu den n Flügen gespeichert. Ein Auszug aus den Passagierdaten P ist für fünf Passagiere beispielhaft in Tabelle 3 dargestellt. Die Passagierdaten P sind flugspezifisch und stehen in der Regel nicht Monate im Voraus zur Verfügung sondern erst Stunden oder Tage vor der Abflugzeit. Die Passagierdaten P der n Flüge werden durch die Recheneinheit 12 aus dem dritten Speicher 17 abgerufen und zumindest zum Teil in dem zweiten Speicher 16 abgelegt.

Die drei ermittelten Flüge werden von drei verschiedenen Fluggesellschaften (A, E und L) angeboten. Für die drei Flüge A1234, E4711, L1337 ermittelt die Recheneinheit 12 aus den Passagierdaten P eine Gesamtpassagierzahl Z der Flüge und legt diese Gesamtpassagierzahl Z in dem zweiten Speicher 16 ab. Bei dem gezeigten Beispiel der drei Flüge A1234, E4711, L1337 beträgt die Gesamtpassagierzahl Z = (129 + 120 + 135) = 384 (siehe Tabelle 1).

**Tabelle 3**

| Passagier-ID | Flugnummer | Sitzklasse | Essen | Trinken | Sitzreihenabstand [inch] | Sitzbreite [inch] |
|---|---|---|---|---|---|---|
| #1 | A1234 | Economy | Nein | Ja | 32 | 17 |
| #2 | A1234 | Economy | Nein | Ja | 32 | 17 |
| #3 | E4711 | Business | Ja | Ja | 40 | 21 |
| #4 | E4711 | Business | Ja | Ja | 40 | 21 |
| ... | | | | | | |
| #384 | L1337 | Economy | Nein | Nein | 34 | 17 |

Die Passagierdaten P enthalten einzelne Buchungsinformationen B zu den getätigten Buchungen. Eine Buchungsinformation B weist insbesondere eine den Passagier identifizierende ID (Passagier-ID), die Flugnummer des von dem Passagier gebuchten Flugs, die gebuchte Sitzklasse, einen Indikator, ob der Passagier ein Essen gebucht hat, einen Indikator, ob der Passagier ein Getränk gebucht hat, eine Angabe des dem Passagier in dem ersten Passagierflugzeug des gebuchten Fluges zur Verfügung stehenden Sitzreihenabstands, der einen Einfluss auf die Beinfreiheit hat, sowie eine Angabe der Sitzbreite, die dem Passagier in dem ersten Flugzeug zur Verfügung steht, auf. Außer den genannten Passagierdaten P können die Passagierdaten P noch weitere Informationen, wie beispielsweise Sonderwünsche, genauere Angaben zu Essen (Umfang und Art) und Trinken (alkoholische/alkoholfreie Getränke, Anzahl der Freigetränke) oder einen Indikator, ob der Passagier einen Fensterplatz gebucht hat, enthalten.

Das System 10 weist einen Flugzeugpool 60 mit den m zweiten Passagierflugzeugen 40 und weiteren Passagierflugzeugen 62 auf. In Tabelle 4 sind Informationen zu dem Flugzeugpool 60 dargestellt. Diese und weitere Informationen über den Flugzeugpool 60 sowie die Passagierflugzeuge 40, 62 können insbesondere in einem internen Speicher der Recheneinheit 12 hinterlegt sein. Alternativ kann die Recheneinheit 12 diese und weitere Informationen aus einem externen Speicher beziehen, zum Beispiel aus dem zweiten Speicher 16.

Die Recheneinheit 12 ermittelt, ob in dem Flugzeugpool 60 eine Anzahl von m ≤ n - 1 Flugzeuge, also in dem vorliegenden Beispiel m ≤ 2 Flugzeuge zur Verfügung steht, die eine Gesamtkapazität Gₘ ≥ Z besitzen. Vorliegend besitzen die beiden Flugzeuge #3 und #4 (siehe Tabelle 4) eine Gesamtkapazität von Gₘ = 2 • 210 = 420. Die Gesamtkapazität Gₘ ist somit größer als die Gesamtpassagierzahl Z = 384. Somit ermittelt die Recheneinheit 12, dass die Passagiere der drei ermittelten Flüge durch die Flugzeuge #3 und #4 befördert werden können. Somit werden m = 2 zweite Passagierflugzeuge 40 ausgewählt, um die Buchungen der n = 3 Flüge zu übernehmen. Die Recheneinheit 12 legt anschließend fest, welcher Passagier bzw. welche Buchung welchem Sitzplatz in welchem der beiden Flugzeuge #3 und #4 zugeordnet wird. Diese Informationen können den Passagierdaten P hinzugefügt werden, bevor die Passagierdaten P an den zweiten Speicher 16 übertragen werden. Alternativ können die bereits in dem zweiten Speicher 16 gespeicherte Passagierdaten P durch die Recheneinheit 12 modifiziert und ergänzt werden.

**Tabelle 4**

| Flugzeug-ID | Flugzeugtyp | Kapazität |
|---|---|---|
| #1 | A319-100 | 150 |
| #2 | A319-100 | 150 |
| #3 | A321-200 | 210 |
| #4 | A321-200 | 210 |

Aus den Tabellen 1 und 2 lässt sich überschlagsmäßig berechnen, wie viel Treibstoff insgesamt für die Beförderung aller Passagiere der drei ermittelten Flüge A1234, E4711, L1337 verbraucht wird. Ebenso lässt sich überschlagsmäßig berechnen, wie viel Treibstoff bei der Beförderung durch die Flugzeuge #3 und #4 verbraucht wird. Die entsprechenden Daten sind in Tabelle 5 dargestellt.

**Tabelle 5**

| | Flugzeug 1.1 | Flugzeug 1.2 | Flugzeug 1.3 | | Flugzeug 2.1 | Flugzeug 2.2 |
|---|---|---|---|---|---|---|
| | A319-100 | A319-100 | A319-100 | | A321-200 | A321-200 |
| Auslastung A in % | 86 | 80 | 90 | | 91,4 | 91,4 |
| Kapazität K | 150 | 150 | 150 | | 210 | 210 |
| Passagiere/ Buchungen | 129 | 120 | 135 | | 192 | 192 |
| | 384 | | | | 384 | |
| Treibstoff pro Flugstunde in kg | 2500 | 2500 | 2500 | | 2600 | 2600 |
| | 7500 | | | | 5200 | |
| | 100 % | | | | 69,3 % | |
| Treibstoff pro Sitzplatz und Flugstunde in kg | 19,38 | 20,83 | 18,52 | | 13,54 | 13,54 |
| | 58,73 | | | | 27,08 | |
| | 100 % | | | | 46,1 % | |

Wie aus Tabelle 5 hervorgeht, kann durch die erfindungsgemäße Verringerung des Treibstoffverbrauchs rund die Hälfte an Treibstoff eingespart werden. Entsprechend positiv sind zusätzlich die Auswirkungen auf den verursachten CO₂-Ausstoß, der ebenfalls verringert wird.

Ein weiteres Rechenbeispiel ist in Tabelle 6 dargestellt. Dort werden zwei wenig ausgelastete A319-100 durch einen voll ausgelasteten A321-200 ersetzt. Die Treibstoffeinsparung liegt bei fast 75 %.

**Tabelle 6**

| | Flugzeug 1.1 | Flugzeug 1.2 | | Flugzeug 2.1 |
|---|---|---|---|---|
| | A319-100 | A319-100 | | A321-200 |
| Auslastung A in % | 70 | 70 | | 100 |
| Kapazität K | 150 | 150 | | 210 |
| Passagiere | 105 | 105 | | |
| | 210 | | | 210 |
| Treibstoff pro Flugstunde in kg | 2500 | 2500 | | |
| | 5000 | | | 2600 |
| | 100 % | | | 52 % |
| Treibstoff pro Sitzplatz und Flugstunde in kg | 23,81 | 23,81 | | 12,38 |
| | 47,62 | | | |
| | 100 % | | | 26 % |

Es ist zu beachten, dass ein voll ausgelastetes Flugzeug mehr Treibstoff pro Flugstunde verbraucht als ein teilweise ausgelastetes Flugzeug derselben Bauart. Insofern sind genau genommen die Verbrauchswerte aus Tabelle 2 nicht für jeden Auslastungsgrad desselben Flugzeugtyps identisch. Diese Abweichung wurde bei der Berechnung in den Tabellen 5 und 6 außer Acht gelassen, da genaue Werte für die einzelnen Auslastungsgrade nicht zur Verfügung standen. Es ist jedoch in jedem Fall davon auszugehen, dass eine Reduzierung des Treibstoffverbrauchs und des CO₂-Ausstoßes erfolgt, wenn zwei oder mehr Flugzeuge durch eine geringere Anzahl an Flugzeugen ersetzt werden.

Das System gemäß Figur 2 weist eine erste Steuereinheit 20 auf. Die erste Steuereinheit 20 greift auf die Passagierdaten P bzw. die Buchungsinformationen B des zweiten Speichers 16 zu und ruft diese ab. Anschließend erstellt die erste Steuereinheit 20 ein erstes Steuersignal 22 und übermittelt dieses gemeinsam mit zumindest einem Teil der Passagierdaten P an die zwei zweiten Passagierflugzeuge 40.

Zusätzlich erstellt die erste Steuereinheit 20 ein zweites Steuersignal 24 und übermittelt dieses an eine Liefereinheit 30. Das zweite Steuersignal 24 enthält Informationen zu den benötigten Lieferinhalten Lₘ für die zwei zweiten Passagierflugzeuge 40. Die benötigten Lieferinhalte Lₘ werden aus den Passagierdaten ermittelt. Die Liefereinheit 30 liefert anschließend die Lieferinhalte Lₘ an die zwei zweiten Passagierflugzeuge 40. Anschließend werden die zwei zweiten Passagierflugzeuge 40 anhand des ersten Steuersignals 22 und mittels der Lieferinhalte Lₘ konfiguriert.

Die Recheneinheit 12 und/oder die erste Steuereinheit 20 können bei anderen Ausführungsformen auch mit den Check-In-Schaltern und/oder einem Zentralrechner zumindest einer Fluggesellschaft in Verbindung stehen und insbesondere Daten zu einzelnen Buchungen austauschen. Auf diese Weise können aktuelle Änderungen bei den Buchungen unmittelbar bei der Konfiguration der Ausstattungsmerkmale Mₘ der zweiten Passagierflugzeuge berücksichtigt werden. Die Check-In-Schalter können insbesondere mit dem dritten Speicher verbunden sein oder diesen aufweisen. Auf diese Weise können die Check-In-Schalter die Passagierdaten P in dem dritten Speicher ablegen und/oder modifizieren.

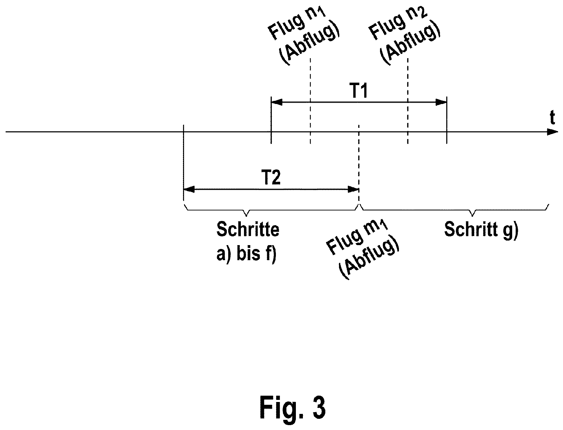

Das zuvor beschriebene Vorgehen basiert auf tatsächlich getätigten Buchungen durch Passagiere. Somit handelt es sich um ein kurzfristiges Ersetzen der n Flüge durch m Flüge. Der zeitliche Ablauf ist in Figur 3 dargestellt. Zwei Flüge n₁, n₂ werden durch einen Flug m₁ ersetzt. Die Schritte a) bis f) des erfindungsgemäßen Verfahrens finden alle in einem zweiten Zeitfenster T2 vor der Abflugzeit des Flugs m₁ statt.

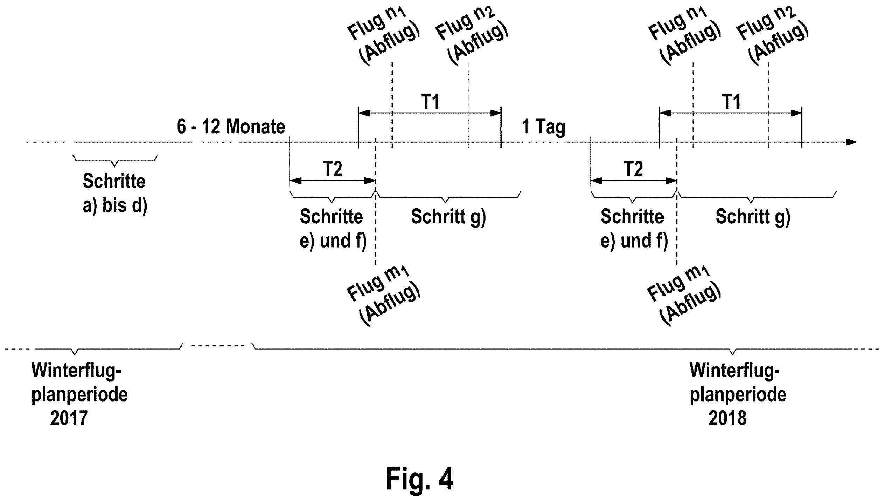

Das erfindungsgemäße System 10 gemäß Figur 2 eignet sich auch für die Durchführung des erfindungsgemäßen Verfahrens in einer abweichenden Ausführungsform. Der zeitliche Ablauf dieser Ausführungsform ist in Figur 4 dargestellt. Bei dieser Ausführungsform des Verfahrens werden beispielsweise zwei Flugverbindungen von unterschiedlichen Fluggesellschaften, deren regelmäßige Flüge n₁, n₂ paarweise Abflugzeiten in einem ersten Zeitfenster T1 aufweisen, durch eine Flugverbindung mit dem regelmäßigen Flug m₁ ersetzt. Die Abflugzeit des regelmäßigen Flugs m₁ liegt dann ebenfalls jeweils in dem ersten Zeitfenster T1. Das erste Zeitfenster T1 ist dabei ebenso regelmäßig wiederkehrend.

Die Schritte a) bis d) des erfindungsgemäßen Verfahrens werden bei dieser Ausführungsform in der Winterflugplanperiode des Jahres 2017 durchgeführt, wobei die Flüge n₁, n₂ aus der Winterflugplanperiode 2018 ermittelt werden. Die Schritte e) und f) werden dann mehrfach in der Winterflugplanperiode 2018 durchgeführt. Dabei werden jeweils die Flüge n₁, n₂ durch einen Flug m₁ ersetzt. Zwischen den Winterflugplanperioden 2017 und 2018 liegt eine Sommerflugplanperiode (nicht dargestellt), weshalb der zeitliche Abstand zwischen den Schritten a) bis d) und der ersten Durchführung der Schritte e) und f) in etwa 6 bis 12 Monate beträgt.

Beispielsweise können zwei Flugverbindungen von unterschiedlichen Fluggesellschaften, die arbeitstäglich um 8 Uhr die Flugroute von FRA nach HAM bedienen, durch eine einzige Flugverbindung, die arbeitstäglich um 8 Uhr die Flugroute von FRA nach HAM bedient, ersetzt werden. Das verwendete zweite Passagierflugzeug wird dabei unter Berücksichtigung der kurzfristig verfügbaren Passagierdaten P konfiguriert. Das Abrufen der Passagierdaten P und das Konfigurieren des zweiten Passagierflugzeugs erfolgt bei dieser Ausführungsform für jeden einzelnen Flug m₁ der ersetzenden Flugverbindung in einem zweiten Zeitfenster T2 vor der Abflugzeit des jeweiligen Flugs m₁. Das zweite Zeitfenster T2 ist somit ebenso regelmäßig wiederkehrend.

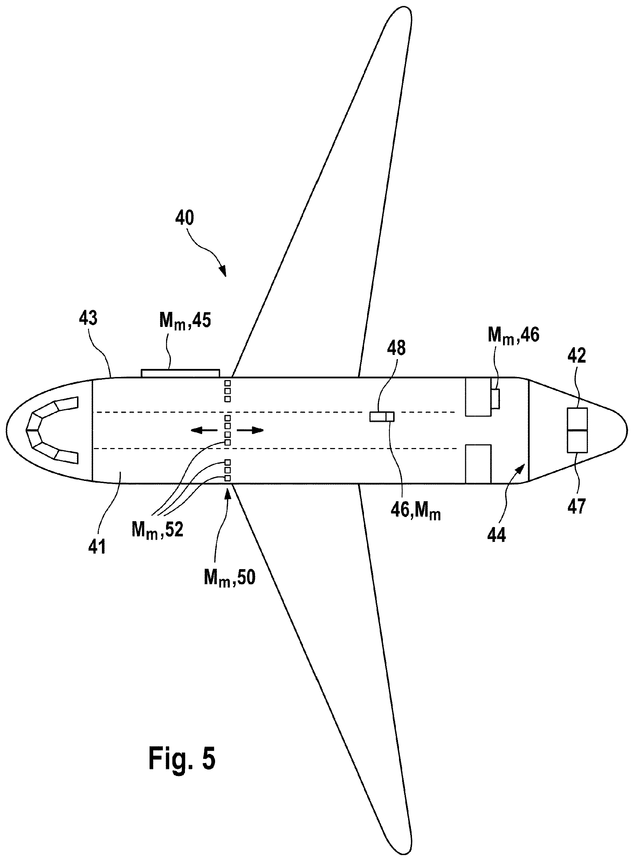

Figur 5 zeigt eines der zweiten Passagierflugzeuge 40 der Figur 2. Das zweite Passagierflugzeug weist eine Kabine 41 auf, an deren hinteren Ende eine Bordküche 44 angeordnet ist. In der Bordküche 44 ist eine interne Anzeigevorrichtung 46 für die Flugbegleiter vorgesehen. Das zweite Passagierflugzeug 40 weist einen Trolley 48 auf, mittels dem während des Fluges beispielsweise Essen und Trinken verteilt wird. Für Start und Landung sowie während des Aufenthalts auf dem Flughafen wird der Trolley 48 in der Bordküche 44 verstaut. Der Trolley weist ebenfalls eine interne Anzeigevorrichtung 46 für die Flugbegleiter auf. Auf einer Außenseite 43 des zweiten Passagierflugzeugs 40 ist eine externe Anzeigevorrichtung 45 angeordnet.

Die Kabine 41 weist eine Mehrzahl von Sitzreihen 50 mit jeweils mehreren Sitzplätzen 52 auf. Zur besseren Übersicht ist nur eine Sitzreihe 50 mit insgesamt zehn Sitzplätzen 52 dargestellt. Die Sitzreihen 50 sind in Längsrichtung der Kabine 41, also entlang der dargestellten Pfeile verschiebbar. Auf diese Weise kann ein Sitzreihenabstand, also der Abstand zwischen zwei unmittelbar hintereinander angeordneten Sitzreihen 50 eingestellt werden. Durch den Sitzreihenabstand wird die Beinfreiheit für die in der Sitzreihe 50 sitzenden Passagiere bestimmt. Jeder Sitzplatz 52 weist eine Sitzplatzumgebung auf, zu der insbesondere die Beleuchtung, Kühl- und Heizmöglichkeiten und das In-Flight-Entertainment gehören. Außerdem verfügt jeder Sitzplatz 52 über bestimmte Funktionen, insbesondere Verstellmöglichkeiten wie eine Neigungseinstellung.

Nicht dargestellt sind Stellmotoren, mittels denen die Sitzreihen verschoben werden. Die Stellmotoren sind mit der zweiten Steuereinheit 42 verbunden und werden von ihr angesteuert. Bevorzugt ist für jede Sitzreihe ein Stellmotor vorgesehen. Mittels der Stellmotoren können die Sitzreihenabstände eingestellt werden.

Das zweite Passagierflugzeug 40 weist eine zweite Steuereinheit 42, die das erste Steuersignal 22 der ersten Steuereinheit 20 erhält, sowie einen fünften Speicher 47 auf. In dem fünften Speicher 47 werden durch die erste Steuereinheit 20 (siehe Figur 2) die Passagierdaten P oder zumindest ein Teil der Passagierdaten P abgelegt. Die zweite Steuereinheit 42 kann auf die Passagierdaten P in dem fünften Speicher 47 zugreifen. Die zweite Steuereinheit 42 ermittelt anhand des ersten Steuersignals 22 und/oder anhand der Passagierdaten P verschiedene Ausstattungsmerkmale Mₘ des zweiten Passagierflugzeugs 40, insbesondere die Position der Sitzreihen 50, die Sitzplätze 52 und ihre Sitzplatzumgebungen sowie die Anzeigevorrichtungen 45, 46. Anhand der ermittelten Ausstattungsmerkmale Mₘ werden die zweiten Passagierflugzeuge 40 konfiguriert.

Die Positionen der Sitzreihen 50 und damit die Sitzreihenabstände können auf diese Weise eingestellt werden. Auch können einzelne Funktionen der Sitzplätze 52 und ihrer Sitzplatzumgebungen aktiviert oder deaktiviert werden.

Die Anzeigevorrichtungen 45, 46 werden dahingehend angesteuert, dass sie bestimmte Informationen wiedergeben. Auf der externen Anzeigevorrichtung 45 können beispielsweise die Logos der Fluggesellschaften angezeigt werden, deren Buchungen dem jeweiligen zweiten Passagierflugzeug 40 zugeteilt wurden. Auf den internen Anzeigevorrichtungen 46 kann den Flugbegleitern der Inhalt einer einem bestimmten Sitzplatz 52 zugeordneten Buchungsinformation B angezeigt werden. Auf diese Weise können die Flugbegleiter den jeweiligen Sitzplatz 52 und die Sitzplatzumgebung weiter konfigurieren, beispielsweise durch das Platzieren von Brandingartikeln und/oder Zubehör wie Zeitschriften oder Kopfkissen.

### Bezugszeichenliste

- 1: Luftverkehrssystem
- 2: Flughafen
- 3: Flugroute

- 10: System
- 12: Recheneinheit
- 14: erster Speicher
- 16: zweiter Speicher
- 17: dritter Speicher
- 18: vierter Speicher

- 20: erste Steuereinheit
- 22: erstes Steuersignal
- 24: zweites Steuersignal

- 30: Liefereinheit

- 40: zweites Passagierflugzeug
- 41: Kabine
- 42: zweite Steuereinheit
- 43: Außenseite
- 44: Bordküche
- 45: externe Anzeigevorrichtung
- 46: interne Anzeigevorrichtung
- 47: fünfter Speicher
- 48: Trolley

- 50: Sitzreihe
- 52: Sitzplatz

- 60: Flugzeugpool
- 62: weiteres Passagierflugzeug

- F: Flugdaten
- I: allgemeine Informationen
- Lₘ: Lieferinhalt
- Mₘ: Ausstattungsmerkmale der zweiten Passagierflugzeuge
- m₁: Flüge
- n₁, n₂: Flüge
- P: Passagierdaten
- S: Flugstrecke
- T1: erstes Zeitfenster
- T2: zweites Zeitfenster
- Z: Gesamtpassagierzahl

## Patentansprüche

1. Verfahren zur Verringerung des Treibstoffverbrauchs von Passagierflugzeugen in einem Luftverkehrssystem (1), das mindestens zwei Flughäfen (2) umfasst, zwischen denen mindestens eine Flugroute (3) besteht, mit folgenden Schritten:
a) Abrufen von Flugdaten F betreffend die Flughäfen (2) aus einem ersten Speicher (14);
b) Ermitteln einer Flugroute (3), entlang der eine Anzahl von n ≥ 2 Flügen, deren Abflugzeiten in einem ersten Zeitfenster T1 liegen, mittels n erster Passagierflugzeuge durchgeführt wird, aus den Flugdaten F;
c) Ermitteln einer Gesamtpassagierzahl Z der n Flüge und Ablegen der Gesamtpassagierzahl Z in einem zweiten Speicher (16);
d) Auswählen von m ≤ n - 1 zweiten Passagierflugzeugen (40) mit einer Gesamtkapazität Gₘ ≥ Z für die Durchführung von m Flügen;
e) Abrufen von Passagierdaten P der n Flüge aus einem dritten Speicher (17) und Ablegen der Passagierdaten P in dem zweiten Speicher (16);
f) Konfigurieren von Ausstattungsmerkmalen Mₘ der m zweiten Passagierflugzeuge (40) unter Berücksichtigung der Passagierdaten P;
g) Durchführen der m Flüge entlang der ermittelten Flugroute (3) mit den m zweiten Passagierflugzeugen (40) mit Abflugzeiten in dem ersten Zeitfenster T1.

2. Verfahren zur Verringerung des Treibstoffverbrauchs von Passagierflugzeugen in einem Luftverkehrssystem (1) nach Anspruch 1,
**dadurch gekennzeichnet, dass** das erste Zeitfenster T1 weniger als eine Stunde, bevorzugt weniger als eine halbe Stunde, besonders bevorzugt weniger als eine Viertelstunde beträgt.

3. Verfahren zur Verringerung des Treibstoffverbrauchs von Passagierflugzeugen in einem Luftverkehrssystem (1) nach Anspruch 1 oder 2,
**dadurch gekennzeichnet, dass** die Gesamtpassagierzahl Z der n Flüge in Schritt c) anhand erfolgter Buchungen oder anhand prognostizierter Buchungen ermittelt wird.

4. Verfahren zur Verringerung des Treibstoffverbrauchs von Passagierflugzeugen in einem Luftverkehrssystem (1) nach einem der vorhergehenden Ansprüche,
**dadurch gekennzeichnet, dass** die Schritte e) und f) in einem zweiten Zeitfenster T2 ≤ 48 h vor den Abflugzeiten der m Flüge durchgeführt werden.

5. Verfahren zur Verringerung des Treibstoffverbrauchs von Passagierflugzeugen in einem Luftverkehrssystem (1) nach einem der vorhergehenden Ansprüche,
**dadurch gekennzeichnet, dass** die Schritte a) bis d) während einer Flugplanperiode und die Schritte e) bis g) in einer späteren Flugplanperiode durchgeführt werden.

6. Verfahren zur Verringerung des Treibstoffverbrauchs von Passagierflugzeugen in einem Luftverkehrssystem (1) nach einem der vorhergehenden Ansprüche,
**dadurch gekennzeichnet, dass** die Schritte e) bis g) im Anschluss an die Schritte a) bis d) mehrfach, insbesondere regelmäßig, wiederholt werden.

7. Verfahren zur Verringerung des Treibstoffverbrauchs von Passagierflugzeugen in einem Luftverkehrssystem (1) nach einem der vorhergehenden Ansprüche,
**dadurch gekennzeichnet, dass** vor Schritt f) mittels einer ersten Steuereinheit (20) zumindest ein Teil der Passagierdaten P aus dem zweiten Speicher (16) abgerufen wird, wobei ein erstes Steuersignal (22) erstellt und an die m zweiten Passagierflugzeuge (40) übermittelt wird.

8. Verfahren zur Verringerung des Treibstoffverbrauchs von Passagierflugzeugen in einem Luftverkehrssystem (1) nach einem der vorhergehenden Ansprüche,
**dadurch gekennzeichnet, dass** die Ausstattungsmerkmale Mₘ der m zweiten Passagierflugzeuge (40) in Abhängigkeit der Ausstattungsmerkmale Mₙ der n ersten Passagierflugzeuge konfiguriert werden.

9. Verfahren zur Verringerung des Treibstoffverbrauchs von Passagierflugzeugen in einem Luftverkehrssystem (1) nach einem der vorhergehenden Ansprüche,
**dadurch gekennzeichnet, dass** verschiedene Innenraumabschnitte und/oder Sitzreihen (50) und/oder Sitzplätze (52) in den m zweiten Passagierflugzeugen (40) unterschiedlich konfiguriert werden, insbesondere in Abhängigkeit von Ausstattungsmerkmalen Mₙ der n ersten Passagierflugzeuge.

10. Verfahren zur Verringerung des Treibstoffverbrauchs von Passagierflugzeugen in einem Luftverkehrssystem (1) nach einem der vorhergehenden Ansprüche,
**dadurch gekennzeichnet, dass** Sitzreihen (50) der m zweiten Passagierflugzeuge (40) in Abhängigkeit von Buchungsinformationen B von Sitzplätzen (52) der jeweiligen Sitzreihe (50) hinsichtlich ihrer Position verändert werden.

11. Verfahren zur Verringerung des Treibstoffverbrauchs von Passagierflugzeugen in einem Luftverkehrssystem (1) nach einem der vorhergehenden Ansprüche,
**dadurch gekennzeichnet, dass** mindestens ein Sitzplatz (52) und/oder mindestens eine Sitzplatzumgebung des Sitzplatzes (52) in Abhängigkeit von Buchungsinformationen B des Sitzplatzes (52) angepasst wird.

12. Verfahren zur Verringerung des Treibstoffverbrauchs von Passagierflugzeugen in einem Luftverkehrssystem (1) nach einem der vorhergehenden Ansprüche,
**dadurch gekennzeichnet, dass** in Schritt e) aus den Passagierdaten P Lieferinhalte Lₙ der n Flüge ermittelt werden und mittels mindestens einer Liefereinheit in Abhängigkeit von den Lieferinhalten Lₙ der n Flüge Lieferinhalte Lₘ zu den m zweiten Passagierflugzeuge (40) geliefert werden.

13. System (10) zur Verringerung des Treibstoffverbrauchs von Passagierflugzeugen in einem Luftverkehrssystem (1), das mindestens zwei Flughäfen (2) umfasst, zwischen denen mindestens eine Flugroute (3) besteht, mit einer Recheneinheit (12), einem ersten Speicher (14), zumindest einem zweiten Passagierflugzeug (40), einem zweiten Speicher (16) und einer ersten Steuereinheit (20), wobei in dem ersten Speicher (14) Flugdaten F betreffend die Flughäfen (2) gespeichert sind und wobei in dem zweiten Speicher (16) Passagierdaten P und/oder Gesamtpassagierzahlen Z gespeichert werden können, wobei das zumindest eine zweite Passagierflugzeug (40) in Abhängigkeit von einem ersten Steuersignal (22) der ersten Steuereinheit (20) hinsichtlich seiner Ausstattungsmerkmale Mₘ veränderbar ist.

14. System (10) zur Verringerung des Treibstoffverbrauchs von Passagierflugzeugen in einem Luftverkehrssystem (1) nach Anspruch 13,
**dadurch gekennzeichnet, dass** eine Liefereinheit (30) vorgesehen ist, die in Abhängigkeit von einem zweiten Steuersignal (24) Lieferinhalte Lₘ zu dem zumindest einen zweiten Passagierflugzeug (40) liefert.

15. System (10) zur Verringerung des Treibstoffverbrauchs von Passagierflugzeugen in einem Luftverkehrssystem (1) nach Anspruch 13 oder 14,
**dadurch gekennzeichnet, dass** eine erste Steuereinheit (20) zum Abrufen der Passagierdaten P aus dem zweiten Speicher (16) sowie zum Erstellen und Übermitteln des ersten Steuersignals (22) an das zumindest eine zweite Passagierflugzeug (40) und/oder zum Erstellen und Übermitteln des zweiten Steuersignals (24) an die Liefereinheit (30) vorgesehen ist.
